# EUROPEAN PATENT SPECIFICATION

(11) **EP 0 387 547 B1**
(45) Date of publication and mention of the grant of the patent: **12.01.1994**
(21) Application number: 90103195.5
(22) Date of filing: 20.02.1990
(51) Int. Cl.: A01D 90/10, A01K 5/00

(54) **Fibrous product mixing truck**
Wagen zum Mischen von faserigen Produkten
Remorque mélangeuse pour produit fibreux

(30) Priority: 10.03.1989 IT 3062489 U
(43) Date of publication of application: 19.09.1990
(73) Proprietor: Faccia, Tiziano, I-35026 Conselve (Padova) (IT)
(72) Inventor: Faccia, Tiziano, I-35026 Conselve (Padova) (IT)
(74) Representative: Modiano, Guido, Dr.-Ing.

(56) References cited:
- EP-A- 0 003 813
- EP-A- 0 232 639
- DE-A- 2 621 709
- US-A- 2 676 002

## Description

The present invention relates to a fibrous-product mixing truck particularly but not exclusively for use in the field of zootechny, of the type indicated in the preamble of claim 1.

Mixing trucks are already currently known and substantially comprise a frame having wheels adapted to facilitate its transport and rigidly supporting a substantially frustum-shaped container, internally provided with one or more vertical mixing scrolls.

Each scroll is welded to a shaft which is rotationally rigid to end pivots and is rotated by means of appropriate mechanical transmissions which are kinematically connected to actuation elements, such as for example the power take-off of a tractor.

The products to be mixed, in particular rough or fibrous forage with protein integrators and minerals together with concentrates such as flours, mashes, pulps etc., are loaded from the top, whereas the product ready for feeding is unloaded through an outlet with a closure door provided on the lateral wall of the container in the front region.

In order to facilitate the distribution of the product, a hydraulically actuated moving belt is arranged below the discharge outlet.

Said known mixing trucks are furthermore provided, in the front part, in practice above said moving belt, with an inspection ladder.

Though it is necessary from a practical point of view, the presence of the moving belt and of the inspection ladder causes considerable problems as regards weighing of the loaded products, which is performed by weighing cells interposed between the container and the frame, and which is necessary to obtain the intended dosages of the various substances and to know the exact amount of fodder distributed to the stock.

In some embodiments of said trucks, the moving belt and the ladder are fixed to the frame and consequently interfere with the movements of the unloading door and compromise weighing.

Other configurations with the ladder and belt fixed to the container have the same problems.

Another disadvantage observed resides in the fact that the moving belt, due to problems related to transport, must not protrude considerably beyond the transverse cross section of the truck and is therefore too short to distribute the mixed product in the required regions.

The aim of the present invention is to provide a truck for mixing fibrous products which solve the disadvantages described above in the prior art.

A consequent primary object is to provide improvements which can be performed without difficulties on known trucks.

Another important object is to allow the distribution of the fodder at a certain distance from the truck.

Still another object is to provide a truck which allows more precise weighings of the material to be mixed.

Not least object is to provide a truck with improvements which can be performed at low cost with current production means.

This aim, these objects and others which will become apparent hereinafter are achieved by a fibrous product mixing truck, as defined in appended claim 1.

The characteristics and advantages of the invention will become apparent from the detailed description of an embodiment thereof, illustrated only by way of non-limitative example in the accompanying drawings, wherein:
figure 1 is a lateral perspective view of a mixing truck improved according to the invention;
figure 2 is a front perspective view of the mixing truck of figure 1;
figure 3 is a perspective view of a frame which supports a moving belt according to the invention.

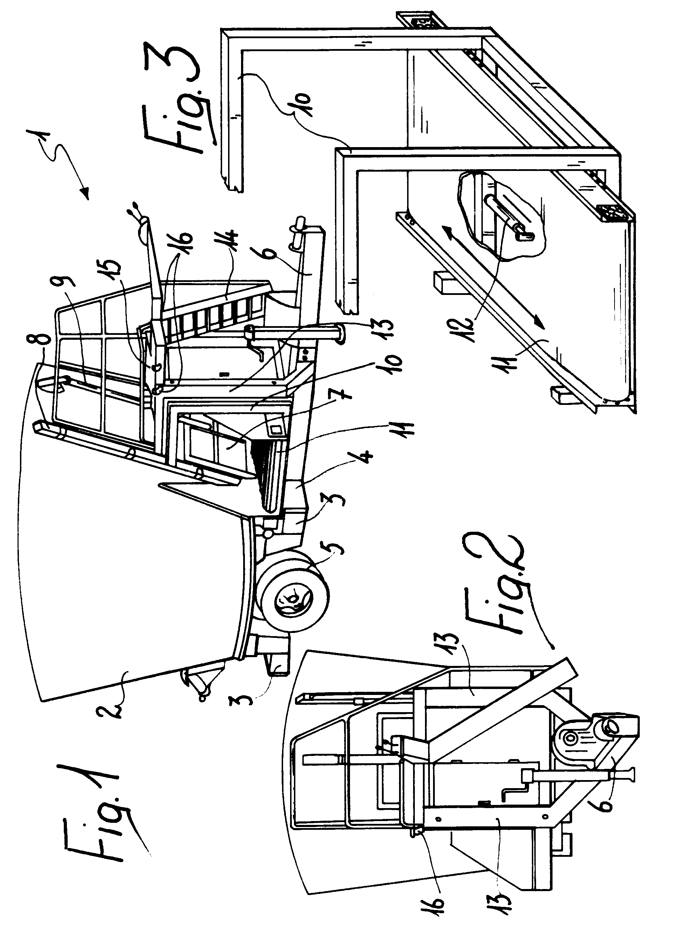

With reference to the above figures, a fibrous product mixing truck is generally indicated by the reference numeral 1 and is substantially constituted by a container 2 in the shape of an inverted truncated cone which is open upward and is conveniently fixed to a chassis or frame 4 with wheels 5, with the interposition of weighing cells 3.

Said frame extends forward with an extension 6 adapted for its coupling to a transport means such as for example a tractor.

Said container 2 is internally provided with a vertical scroll which is not visible in the figures and is welded to a rotating shaft; said scroll has a helical profile arranged along an ideal conical surface.

Said shaft is connected to a mechanical transmission which associates it with actuation elements which are adapted to rotate it and are kinematically connected for example to the power take-off of said tractor, in a per se known manner.

An unloading port, with a related door 7 which is movable in a substantially vertical direction on guides 8 fixed to the container 2 and is actuated by a hydraulic piston 9, is arranged on the wall of the container 2 in the front region thereof.

According to the invention, a support for a sliding belt 11 is rigidly associated to the container, the belt being coupled to the support so as to be movable from a position which is substantially internal to the width of the truck to a position which protrudes considerably therefrom. In particular, the belt support comprises a substantially quadrangular frame 10 of metal tubes, which is welded to the container 2 at the region of the door 7, while the belt 11 is associated to the lower portion of the frame 10.

The translatory motion of the belt 11 is conveniently achieved by means of a hydraulic piston 12 which acts between the frame 10 and said belt 11 or manually by pushing the belt so that it slides on guides to which it is coupled and fixing it with screws to said frame 10.

It should be noted that the frame 10 and the sliding belt 11, which are coupled to the container 2, in no way interfere with the frame 4 neither when idle nor during the use of the mixing truck 1 and the weighing of the products contained therein.

Supporting shoulders 13 for a ladder 14 with upper inspection platform 15 are welded to said extension 6 of the frame 4 and extend upward.

Said shoulders 13 are made of metal tubes which conveniently constitute the tank of hydraulic oil for the actuation of the various moving parts of the truck 1.

Said shoulders 13 have appropriate upper fillers 16 for this purpose.

It should also be noted that the shoulders 13, the ladder 14 and the platform 15 are separate from the container 2 and do not interfere with its movements during the weighing operations.

As can be deduced from the above, the intended aim and objects are therefore achieved, improvements having been provided which are adapted to improve the operation of vertical-scroll mixing trucks.

Since the moving belt can translate, it is in fact capable of distributing the mixed product even at a certain distance from the frame, while the weighing action is not biased in any way.

The fact should be furthermore noted that the supporting shoulders of the ladder and of the platform have been used to constitute the hydraulic oil tank, achieving considerable space savings.

The materials employed, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A fibrous product mixing truck comprising a mixing container (2) with one or more internal vertical scrolls welded onto corresponding rotating shafts, said container (2) being mounted on a wheeled frame (4) with weighing cells (3) interposed between the container and the wheeled frame, an unloading belt (11) being provided for unloading the container and a ladder (14) defining an inspection platform (15) being rigidly mounted on the wheeled frame characterized in that a support frame (10) is provided rigidly attached to the container and supporting the unloading belt (11) which is movably coupled to the support frame, the ladder thus being separate from the unloading belt.

2. A truck according to claim 1, characterized in that said support of said unloading belt (11) comprises a frame (10) made of metallic tube with a substantially quadrangular shape welded to said container (2), said belt (11) being associated with the lower portion of said frame (10).

3. A truck according to claim 1, characterized in that said unloading belt (11) is movable on said support (10) and is actuated by a hydraulic piston (12) rigidly coupled between the support and the belt.

4. A truck according to claim 1, characterized in that said unloading belt (11) is manually movable on said support (10) and can be rigidly coupled thereto by bolting in the desired position.

5. A truck according to claim 1, characterized in that said wheeled frame (4) is provided with a front extension (6) on which vertical shoulders (13) are fixed for supporting said ladder (14) with inspection platform (15).

6. A truck according to claim 5, characterized in that said shoulders (13) are made of metallic tube and define a hydraulic oil tank for the actuation of the various movements of the mixing truck.

## Patentansprüche

1. Mischwagen für faserförmige Produkte, mit einem Mischbehälter (2), der im Inneren eine oder mehrere lotrechte, jeweils auf eine rotierende Welle geschweißte Schnecken aufweist und auf einem Radgestell (4) mit zwischen Behälter und Rahmen angeordneten Wägezellen (3) montiert ist, wobei ein Austragband (11) zum Entleeren des Behälters vorgesehen ist, und eine fest auf dem Radgestell montierte Leiter (14) eine Inspektionsplattform (15) bildet, **gekennzeichnet durch** einen Tragrahmen (10), der mit dem Behälter fest verbunden ist und das mit ihm verschiebbar verbundene Austragband (11) trägt, von dem die Leiter somit getrennt ist.

2. Wagen nach Anspruch 1, **dadurch gekennzeichnet,** daß der genannte Träger des Austragbandes (11) einen Rahmen (10) aufweist, der aus Metallrohren mit angenähert viereckigem Querschnitt besteht, die mit dem genannten Behälter (2) verschweißt sind, wobei der genannte Bandförderer (11) dem unteren Abschnitt des Rahmens (10) zugeordnet ist.

3. Wagen nach Anspruch 1, **dadurch gekennzeichnet,** daß das Austragband (11) auf dem genannten Träger (10) verschiebbar und durch einen Hydraulikkolben (12) betätigbar ist, der fest zwischen dem Träger und dem Bandförderer gekuppelt ist.

4. Wagen nach Anspruch 1, **dadurch gekennzeichnet,** daß das Austragband (11) auf dem Träger (10) manuell verschiebbar und gegenüber dem Träger (10) durch Verbolzung in der gewünschten Position festlegbar ist.

5. Wagen nach Anspruch 1, **dadurch gekennzeichnet,** daß das Radgestell (4) eine Frontverlängerung (6) aufweist, auf der Vertikalschultern (13) befestigt sind, die die Leiter (14) mit Inspektionsplattform (15) tragen.

6. Wagen nach Anspruch 5, **dadurch gekennzeichnet,** daß die Vertikalschultern (13) aus Metallrohr bestehen und einen Hydrauliköltank bilden für die Betätigung der verschiedenen Bewegungen des Mischwagens.

## Revendications

1. Chariot de mélange de produit fibreux, comprenant un récipient de mélange (2) comportant une ou plusieurs hélices verticales intérieures, soudées sur des arbres rotatifs correspondants, ledit récipient (2) étant monté sur un cadre à roues (4), pourvu de cellules de pesée (3) disposées entre le récipient et le cadre à roues, une courroie de déchargement (11) étant prévue pour décharger le récipient et une échelle (14) définissant une plateforme d'inspection (15) montée rigidement sur le cadre à roues, caractérisé en ce qu'un cadre de support (10) fixé rigidement au récipient et supportant la courroie de déchargement (11) qui est accouplée de façon déplaçable avec ce cadre de support, l'échelle étant ainsi séparée de la courroie de déchargement.

2. Chariot selon la revendication 1, caractérisé en ce que le support de ladite courroie de déchargement (11) comprend un cadre (10), constitué d'un tube métallique présentant une forme sensiblement rectangulaire, soudé audit récipient (2), la courroie (11) étant associée à la partie inférieure dudit cadre (10).

3. Chariot selon la revendication 1, caractérisé en ce que ladite courroie de déchargement (11) peut se déplacer sur ledit support (10) et est actionné par un piston hydraulique (12), couplé rigidement entre le support et la courroie.

4. Chariot selon la revendication 1, caractérisé en ce que ladite courroie de déchargement (11) est déplaçable manuellement sur ledit support (10) et peut lui être couplé rigidement par boulonnage dans la position souhaitée.

5. Chariot selon la revendication 1, caractérisé en ce que ledit cadre à roues (4) est pourvu d'un prolongement avant (6) sur lequel sont fixés des épaulements verticaux (13) pour supporter l'échelle (14) et la plateforme d'inspection (15).

6. Chariot selon la revendication 5, caractérisé en ce que lesdits épaulements (13) sont constitués d'un tube métallique et définissent un réservoir d'huile hydraulique pour actionner les différents mouvements du chariot de mélange.
